# EUROPÄISCHE PATENTSCHRIFT

(11) **EP 0 596 360 B1**
(45) Veröffentlichungstag und Bekanntmachung des Hinweises auf die Patenterteilung: **20.01.1999**
(21) Anmeldenummer: 93117241.5
(22) Anmeldetag: 25.10.1993
(51) Int. Cl.: C07F 7/18, C08G 18/10, C08G 18/28

(54) **Verwendung vonAlkoxysilian- und Aminogruppen aufweisenden Verbindungen**
Use of aminogroup containing alkoxysilanes
Utilisation de composés d'alcoxysilanes contenant des groupes amino

(30) Priorität: 06.11.1992 DE 4237468
(43) Veröffentlichungstag der Anmeldung: 11.05.1994
(73) Patentinhaber: BAYER AG, 51368 Leverkusen (DE)
(72) Erfinder: Zwiener, Christian, Dr., D-50735 Köln (DE); Schmalstieg, Lutz, Dr., D-50676 Köln (DE); Pedain, Josef, Dr., D-51061 Köln (DE)

(56) Entgegenhaltungen:
- EP-A- 0 264 022
- US-A- 3 033 815
- US-A- 3 759 968
- Datenbase CHEMLIST (prod. Chem. Abs. Service Columbus, OH. USA) * AN 155198; RN 94277-93-7: Diethyl-N-(3-(triethoxysilyl)propyl)-L-asp artat* & EINECS No.: 304-678-1
- Anhang zum Amtsblatt der Europäischen Gemeinschaften ISSN 0376-9461; C146A; Mitteilungen und Bekanntmachungen; Band II, Seite 1688; 15/6/90

## Beschreibung

Die vorliegende Erfindung betrifft die Verwendung von Alkoxysilan- und sekundäre Aminogruppen aufweisenden Verbindungen, als Reaktionspartner für organische Polyisocyanate bei der Herstellung von Alkoxysilan- und Harnstoffgruppen aufweisenden Prepolymeren.

Hydrolysierbare organofunktionelle Silane sind Schlüsselbausteine zur Verknüpfung der konventionellen Polymerchemie mit der Silikonchemie. Technisch von Bedeutung sind dabei insbesondere Verbindungen der allgemeinen Formel

(RO)₃Si-(CH₂)₃-X (R = Alkyl, X = funktionelle Gruppe).

Zum einen besitzen derartige Verbindungen hydrolysierbare Silylgruppen, die in Gegenwart von Feuchtigkeit über eine "Silanpolykondensation" vernetzten, zum anderen weisen die Verbindungen andere funktionelle Gruppen X auf, die eine chemische Anbindung an übliche Polymermaterialien ermöglichen (vgl. z.B. Angew. Chem. 98 (1986) 237-253).

Hydrolysierbare funktionelle Silane der genannten Formel bei denen die funktionelle Gruppe X zerewitinoffaktive H-Atome aufweist, sind potentiell geeignet zur Modifizierung von Polyisocyanaten (vgl. z.B. WO 92/05212). Kommerziell verfügbare Produkte für diesen Einsatzzweck enthalten entweder NH₂- und/oder NH-Gruppen oder auch SH-Gruppen.

SH-Gruppen aufweisende Alkoxysilane werden z.B. beschrieben in GB-A-1 102 251, EP-A-00 18 094, DE-A-11 62 818, US-A-3 590 065, 3 849 471, 4 082 790, 4 012 403 oder 4 401 286. Allen SH-Gruppen aufweisenden Alkoxysilanen ist der Mercaptan-typische unangenehme Geruch zueigen, so daß aufgrund verbleibender Restmengen im Polymer eine Geruchsbelästigung resultieren kann.

Aminogruppen aufweisende Alkoxysilane werden z.B. beschrieben in J. Org. Chem. 36 (1971), S. 3120, DE-A-1 152 695, 1 271 712, 2 161 716, 2 408 480, 2 521 399, 2 749 316 oder US-A-2 832 754, 2 971 864 oder 4 481 364. Den aminofunktionellen Silanen des Standes der Technik gemeinsam ist der Nachteil einer extrem hohen Reaktivität gegenüber Isocyanatgruppen, so daß sich diese Verbindungen nicht mit Polyisocyanaten wegen Unverträglichkeiten, Inhomogenitäten und extrem hohen Viskositäten der Umsetzungsprodukte umsetzen lassen.

Feuchtigkeitsvernetzbare α-Aminoalkylsilanderivate können entsprechend den deutschen Offenlegungsschriften 1 812 504 und 1 812 562 hergestellt werden. Aufgrund der aufwendigen Synthese konnten die dort beschriebenen funktionellen Silane jedoch keine technische Bedeutung erlangen.

Aufgabe der vorliegenden Erfindung war daher die Verwendung technisch gut zugänglicher NH-Gruppen aufweisender Alkoxysilane, die nicht mit den Nachteilen des Standes der Technik behaftet sind.

Gegenstand der Erfindung ist die Verwendung Alkoxysilan- und Aminogruppen aufweisender Verbindungen der Formel 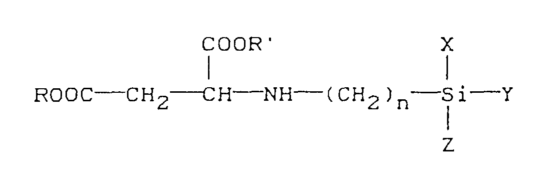 in welcher
- R und R': für gleiche oder verschiedene, unterhalb 100°C gegenüber Isocyanatgruppen inerte organische Reste stehen,
- X, Y und Z: für gleiche oder verschiedene, unterhalb 100°C gegenüber Isocyanatgruppen inerte organische Reste stehen, mit der Maßgabe, daß mindestens einer dieser Reste für eine Alkoxygruppe steht, und
- n: für eine ganze Zahl von 2 bis 4 steht, als Reaktionspartner für organische Polyisocyanate bei der Herstellung von Alkoxysilan- und Harnstoffgruppen aufweisenden Prepolymeren.

Die Akoxysilan- und Aminogruppen aufweisenden Verbindungen werden hergestellt, indem man innerhalb des Temperaturbereichs von 0 bis 100°C äquimolare Mengen an Aminoalkylalkoxysilanen der Formel 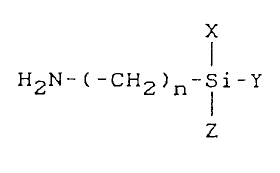 und
Malein- oder Fumarsäureestern der Formel

ROOC-CH=CH-COOR'

miteinander umsetzt.

Aus der US-A-3 033 815 sind derartige Umsetzungen bekannt.

In den vorstehend genannten Formeln und auch nachstehend haben die Variablen folgende bevorzugte Bedeutung:
- R und R': stehen vorzugsweise für gleiche oder verschiedene Alkylreste mit 1 bis 4 Kohlenstoffatomen, besonders bevorzugt jeweils für Methylreste oder jeweils für Ethylreste.
- X: steht vorzugsweise für eine Alkoxygruppe mit 1 bis 4 Kohlenstoffatomen.
- Y und Z: stehen vorzugsweise für gleiche oder verschiedene Reste und bedeuten Alkyl- oder Alkoxygruppen mit jeweils 1 bis 4 Kohlenstoffatomen.
- n: steht vorzugsweise für 3.

Die Herstellung der erfindungsgemäß verwendeten Verbindungen erfolgt durch Umsetzung von Aminoalkylalkoxysilanen der allgemeinen Formel 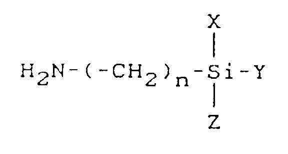 mit Malein- und/oder Fumarsäureestern der allgemeinen Formel

ROOC-CH=CH-COOR'.

Die Umsetzung primärer Amine mit Malein- bzw. Fumarsäureestern ist aus der Literatur prinzipiell bekannt und wird z.B. beschrieben in EP-A-0 403 921, DE-OS 1 670 812 und DE-OS 2 158 945. In keiner dieser Veröffentlichungen finden sich jedoch Hinweise auf die Reaktion Alkoxysilan-funktioneller Amine mit Malein- bzw. Fumarsäureestern.

Beispiele für geeignete Aminoalkylalkoxysilane sind 2-Aminoethyldimethylmethoxysilan, 3-Aminopropyltrimethoxysilan, 3-Aminopropyltriethoxysilan und 3-Aminopropyl-methyl-diethoxysilan, 3-Aminopropyltrimethoxysilan und 3-Aminopropyltriethoxysilan sind besonders bevorzugt.

Beispiele geeigneter Malein- oder Fumarsäureester sind Maleinsäuredimethylester, Maleinsäurediethylester, Maleinsäuredi-n-butylester sowie die entsprechenden Fumarsäureester. Maleinsäuredimethylester und Maleinsäurediethylester sind besonders bevorzugt.

Die Umsetzung der Malein- bzw. Fumarsäureester mit den Aminoalkylalkoxysilanen erfolgt innerhalb eines Temperaturbereichs von 0 bis 100°C, wobei die Mengenverhältnisse in der Regel so gewählt werden, daß die Ausgangsverbindungen im molaren Verhältnis 1:1 eingesetzt werden. Die Umsetzung kann in Substanz oder auch in Gegenwart von Lösungsmitteln wie z.B. Dioxan durchgeführt werden. Die Mitverwendung von Lösungsmitteln ist jedoch weniger bevorzugt. Selbstverständlich können auch Mischungen verschiedener 3-Aminoalkylalkoxysilane mit Mischungen von Fumar- und/oder Maleinsäureestern umgesetzt werden.

Die erfindungsgemäß verwendeten Amino- und Alkoxysilangruppen aufweisenden Verbindungen stellen farblose bis blaßgelb gefärbte Verbindungen dar, die ohne weitere Reinigung zur Modifizierung von Isocyanatgruppen-aufweisenden Verbindungen eingesetzt werden können.

Die erfindungsgemäß verwendeten Verbindungen stellen wertvolle Modifizierungsmittel für Isocyanatgruppen aufweisende Verbindungen zwecks Herstellung von Alkoxysilan- und Harnstoffgruppen aufweisenden Prepolymeren dar. Derartige Prepolymere können beispielsweise zur Herstellung von durch "Silanpolykondensation" vernetzbare Dichtstoffe verwendet werden. Bei dieser Verwendung werden die Prepolymeren oftmals im Gemisch mit geeigneten Katalysatoren wie beispielsweise Dibutylzinndiacetat eingesetzt. Auch niedermolekulare basische Aminoalkyltrialkoxysilane, wie sie beim erfindungsgemäßen Verfahren als Ausgangsmaterial eingesetzt werden, beschleunigen die Aushärtung der Prepolymeren und können daher bei der Anwendung der Prepolymeren für den genannten Einsatzzweck in katalytischen Mengen mitverwendet werden.

In den nachfolgenden Beispielen beziehen sich alle Prozentangaben auf das Gewicht.

### Beispiele

### Beispiel 1

### N-(3-Triethoxysilylpropyl)asparaginsäurediethylester

221,0 g (1,0 Mol) 3-Aminopropyltriethoxysilan werden in einer Standard-Rührapparatur vorgelegt. Hierzu tropft man über ca. 4 h bei Raumtemperatur 172,0 g (1,0 Mol) Maleinsäurediethylester. Die exotherme Reaktion wird durch Wasserbadkühlung bei ca. 30°C gehalten. Man läßt weitere 8 h bei Raumtemperatur nachrühren und erhält eine klare farblose Flüssigkeit mit einer Viskosität von ca. 30 mPa.s (23°C). Die Basentitration zeigt einen nahezu vollständigen Umsatz an. Das Amin-Äquivalentgewicht beträgt ca. 398 g (Theorie: 393 g).

### Beispiel 2

### N-(3-Triethoxysilylpropyl)asparaginsäuredimethylester

221,0 g (1,0 Mol) 3-Aminopropyltriethoxysilan werden in einer Standard-Rührapparatur vorgelegt. Hierzu tropft man bei Raumtemperatur über ca. 4 h 144,0 g (1,0 Mol) Maleinsäuredimethylester. Die exotherme Reaktion wird durch Wasserbadkühlung bei ca. 30°C gehalten. Während der Reaktion setzen sich an der Gefäßwand Kristalle des durch basenkatalysierte Umlagerung aus dem Maleinsäuredimethylester gebildeten Fumarsäuredimethylesters ab, die während der Nachrührzeit von ca. 16 h bei Raumtemperatur abreagieren. Man erhält eine klare farblose Flüssigkeit mit einer Viskosität von ca. 30 mPa.s (23°C). Das durch Basentitration ermittelte Amin-Äquivalentgewicht beträgt ca. 372 g (Theorie: 365 g).

### Beispiel 3

### N-(3-Triethoxysilylpropyl)asparaginsäuredi-n-butylester

221,0 g (1,0 Mol) 3-Aminopropyltriethoxysilan und 228,0 g (1,0 Mol) Maleinsäuredi-n-butylester werden analog Beispiel 1 umgesetzt. Die Viskosität der klaren, blaßgelben gefärbten Flüssigkeit beträgt ca. 30 mPa.s (23°C). Die Basen-Titration ergibt ein Amin-Äquivalentgewicht von ca. 462 g (Theorie: 449 g).

### Beispiel 4

### N-(3-Trimethoxysilylpropyl)asparaginsäuredimethylester

179,0 g (1,0 Mol) 3-Aminopropyltrimethoxysilan und 144,0 g (1,0 Mol) Maleinsäuredimethylester werden analog Beispiel 2 umgesetzt. Die Viskosität der klaren, blaßgelben Flüssigkeit beträgt ca. 30 mPa.s (23°C). Die Basen-Titration ergibt ein Amin-Äquivalentgewicht von ca. 331 g (Theorie: 323 g).

### Beispiel 5

### N-(3-Trimethoxysilylpropyl)asparaginsäurediethylester

179,0 g (1,0 Mol) 3-Aminopropyltrimethoxysilan und 172,0 g (1,0 Mol) Maleinsäurediethylester werden analog Beispiel 1 umgesetzt. Man erhält ein klares farbloses Produkt mit einer Viskosität von ca. 30 mPa.s (23°C). Das durch Basen-Titration bestimmte Amin-Äquivalentgewicht beträgt ca. 359 (Theorie: 351 g).

### Beispiel 6

### Herstellung eines Alkoxvsilan-funktionellen Polyurethanprepolymers

1000 g eines durch Propoxylierung von Propylenglykol hergestellten Polyetherdiols der OH-Zahl 56 werden mit 174 g 2,4-Toluylendiisocyanat 6 Stunden bei 80°C prepolymerisiert. Man erhält ein NCO-Prepolymer mit einem NCO-Gehalt von 3,5 %.

Nach Abkühlen auf Raumtemperatur werden 380 g des Adduktes aus Maleinsäurediethylester und 3-Aminopropyltriethoxysilan aus Beispiel 1 bei Raumtemperatur unter kräftigem Rühren zugetropft. Nach einstündigem Nachrühren bei Raumtemperatur ist die Mischung frei von Isocyanatgruppen. Das erhaltene klare und farblose Produkt hat eine Viskosität von 30 000 mPa.s bei 23°C.

### Beispiel 7

### Feuchtigkeitshärtung des Alkoxysilan-funktionellen PU-Prepolymers aus Beispiel 6

100 g des Produktes aus Beispiel 6 werden mit 0,5 g Dibutylzinndiacetat und 5 g 3-Aminopropyltriethoxysilan innig vermischt. Ein auf eine Glasplatte aufgerakelter Film (Schichtdicke 1 mm) härtet über Nacht zu einem opaken, elastischen Kunststoff.

### Beispiel 8

### Herstellung eines Alkoxysilan-funktionellen Polyurethanprepolymers

2000 g eines Polyetherdiols der OH-Zahl 28, hergestellt durch Propoxylierung von Propylglykol und anschließende Ethoxylierung des Propoxylierungsproduktes (PO:EO-Gewichtsverhältnis = 85:15) werden mit 174 g eines Gemisches aus 80 Gew.-% 2,4-Toluylendiisocyanat und 20 Gew.-% 2,6-Toluylendiisocyanat 7 Stunden bei 80°C prepolymerisiert. Man erhält ein NCO-Prepolymer mit einem NCO-Gehalt von 1,8 %.

Nach Abkühlen auf Raumtemperatur werden 380 g des Adduktes aus Maleinsäuredimethylester und 3-Aminopropyltriethoxysilan aus Beispiel 2 bei Raumtemperatur unter kräftigem Rühren zugetropft. Nach einstündigem Nachrühren ist die Mischung frei von Isocyanatgruppen. Das erhaltene klare und farblose Produkt hat eine Viskosität von 28 000 mPa.s/23°C.

### Beispiel 9

### Feuchtigkeitshärtung des Alkoxysilan-funktionellen Polyurethanprepolymers aus Beispiel 8

100 g des Produktes aus Beispiel 8 werden mit 0,5 g Dibutylzinndiacetat, 5 g 3-Aminopropyltriethoxysilan und 5 g Methyltrimethoxysilan innig vermischt. Ein auf eine Glasplatte aufgerakelter Film (Schichtdicke 1 mm) härtet über Nacht zu einem opaken, elastischen Kunststoff.

## Patentansprüche

1. Verwendung von Alkoxysilan- und Aminogruppen aufweisende Verbindungen der Formel 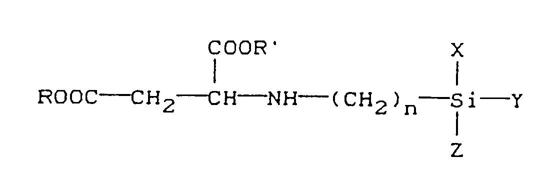 in welcher
R und R' für gleiche oder verschiedene, unterhalb 100°C gegenüber Isocyanatgruppen inerte organische Reste stehen,
X, Y und Z für gleiche oder verschiedene, unterhalb 100°C gegenüber Isocyanatgruppen inerte organische Reste stehen, mit der Maßgabe, daß mindestens einer dieser Reste für eine Alkoxygruppe steht, und
n für eine ganze Zahl von 2 bis 4 steht,
als Reaktionspartner für organische Polyisocyanate bei der Herstellung von Alkoxysilan- und Harnstoffgruppen aufweisenden Prepolymeren.

## Claims

1. Use of compounds containing alkoxysilane groups and amino groups and corresponding to the formula 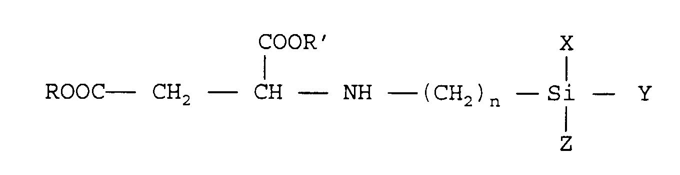 wherein
R and R' denote identical or different organic groups which below 100°C are inactive to isocyanate groups,
X, Y and Z denote identical or different organic groups which below 100°C are inactive to isocyanate groups, with the proviso that at least one of these groups is an alkoxy group, and
n stands for an integer from 2 to 4,
as reactants for organic polyisocyanates in the preparation of prepolymers containing alkoxysilane groups and urea groups.

## Revendications

1. Utilisation de composés présentant des groupes alcoxysilane et amino, de la formule 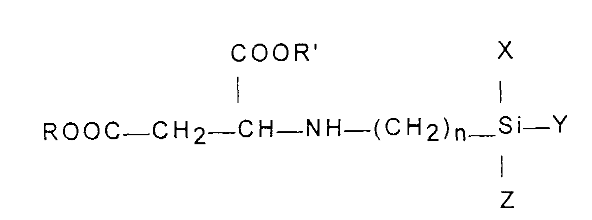 dans laquelle
R et R' représentent des radicaux organiques identiques ou différents, inertes vis-à-vis des groupes isocyanate au-dessous de 100 °C,
X, Y et Z correspondent à des radicaux organiques identiques ou différents, inertes vis-à-vis des groupes isocyanate au-dessous de 100 °C, à la condition qu'au moins un de ces radicaux représente un groupe alcoxy, et
n est un nombre entier de 2 à 4,
comme partenaires réactionnels pour des polyisocyanates organiques dans la production de prépolymères possédant des groupes alcoxysilane et urée.
